# EUROPÄISCHE PATENTANMELDUNG

(11) **EP 1 081 466 A1**
(43) Veröffentlichungstag der Anmeldung: **07.03.2001**
(21) Anmeldenummer: 00115883.1
(22) Anmeldetag: 25.07.2000
(51) Int. Cl.: G01F 23/00

(54) **Verfahren und Vorrichtung zur Ermittlung eines Füllstandes einer Flüssigkeit in einem Behälter**

(30) Priorität: 04.09.1999 DE 19942377
(71) Anmelder: Mannesmann VDO AG, 60388 Frankfurt am Main (DE)
(72) Erfinder: Pauer, Bernd, 65817 Eppstein (DE)
(74) Vertreter: Rassler, Andrea, Dipl.-Phys.

(57) **Zusammenfassung**

Bei der Ermittlung eines Füllstandes an Flüssigkeit in einem Behälter (1) wird ein Meßraum (7), in dem sich zunächst derselbe Füllstand wie in dem Behälter (1) befindet, vollständig mit Flüssigkeit gefüllt. Die für die vollständige Füllung des Meßraums (7) benötigte Zeit wird gemessen und mit zuvor ermittelten Werten verglichen. Durch den Vergleich läßt sich der Füllstand im Behälter (1) ermitteln.

## Beschreibung

Die Erfindung betrifft ein Verfahren zur Ermittlung eines Füllstandes einer Flüssigkeit in einem Behälter, insbesondere in einem Kraftstoffbehälter eines Kraftfahrzeuges. Weiterhin betrifft die Erfindung eine Vorrichtung zur Ermittlung eines Füllstandes einer Flüssigkeit in einem Behälter, insbesondere einem Kraftstoffbehälter eines Kraftfahrzeuges.

Zur Ermittlung eines Füllstandes in einem Behälter werden meist Hebelgeber mit einem Schwimmer eingesetzt. Der Schwimmer folgt dem Flüssigkeitsspiegel in dem Behälter und verschwenkt in Abhängigkeit des Füllstandes einen mit einem Potentiometer verbundenen Hebel. Signale des Potentiometers werden anschließend in elektrische Signale umgesetzt und auf den Füllstand und damit das in dem Behälter befindliche Volumen an Flüssigkeit umgerechnet. Nachteilig hierbei ist, daß der Hebel sehr große Abmessungen innerhalb des Behälters benötigt. Insbesondere Kraftstoffbehälter heutiger Kraftfahrzeuge sind jedoch sehr kompliziert geformte Behälter, in denen sich derartige Hebel nur schwer anordnen lassen.

Der Erfindung liegt das Problem zugrunde, ein Verfahren der eingangs genannten Art zu schaffen, das sich nahezu unabhängig von der Geometrie des Behälters zur Ermittlung des Füllstandes anwenden läßt. Weiterhin soll eine Vorrichtung der eingangs genannten Art geschaffen werden, mit der sich der Füllstand in einem nahezu beliebig geformten Behälter ermitteln läßt.

Das erstgenannte Problem wird erfindungsgemäß dadurch gelöst, daß ein sich über die maximal zu messende Höhe des Kraftstoffbehälters erstreckender und mit dem Kraftstoffbehälter verbundener Meßraum bei einer bekannten Druckdifferenz entleert oder vollständig befüllt wird, daß eine zur Befüllung oder Entleerung des Meßraums erforderliche Zeit ermittelt und die ermittelte Zeit auf den Füllstand in dem Behälter umgerechnet wird.

Durch dieses Verfahren wird der Füllstand an Flüssigkeit in dem Behälter über die Entleerungs- oder Füllgeschwindigkeit des Meßraums erfaßt. Da der Meßraum mit dem Kraftstoffbehälter verbunden ist, befindet sich bei Ausgangspunkt des erfindungsgemäßen Verfahrens ein dem Füllstand im Kraftstoffbehälter entsprechender Füllstand in dem Meßraum. Die für die vollständige Befüllung oder Entleerung des Meßraums erforderliche Zeitspanne ist damit ein Maß für den Füllstand im Behälter. Die Geometrie des Meßraums und des Kraftstoffbehälters hat bei der Ermittlung des Füllstandes mit dem erfindungsgemäßen Verfahren nahezu keinen Einfluß. Der Meßraum kann damit beispielsweise schräg angeordnet oder gebogen sein.

Die Ermittlung des Füllstandes in dem Behälter erfordert gemäß einer vorteilhaften Weiterbildung der Erfindung einen besonders geringen Rechenaufwand, wenn die zur Füllung des Meßraums ermittelte Zeit mit einer zuvor ermittelten Volumen/Füllhöhe-Kennlinie verglichen wird. Hierdurch kann der Meßraum zudem unterschiedliche Querschnitte aufweisen.

Das zweitgenannte Problem, nämlich die Schaffung einer Vorrichtung der eingangs genannten Art, mit der sich der Füllstand in einem nahezu beliebig geformten Behälter ermitteln läßt, wird erfindungsgemäß dadurch gelöst, daß ein mit dem Behälter verbundener und sich über die maximal zu messende Höhe erstreckender Meßraum eine Verbindung mit ansteuerbaren Flüssigkeitsfördermitteln aufweist und daß eine Meßeinrichtung zur Ermittlung der zur Befüllung oder Entleerung des Meßraums erforderlichen Zeitspanne und eine Auswerteeinheit zur Berechnung des Füllstands in dem Behälter aus der ermittelten Zeitspanne ausgebildet ist.

Durch diese Gestaltung benötigt die erfindungsgemäße Fördereinrichtung keinen ausladend gestalteten Hebelgeber. Da der Meßraum mit dem Behälter verbunden ist, hat die Flüssigkeit im Grundzustand in dem Meßraum und in dem Behälter jeweils dieselbe Füllhöhe. Die Zeitspanne, die bei bekannter Fördergeschwindigkeit zur Befüllung oder Entleerung des Meßraums erforderlich ist, ist ein Maß für den Füllstand im Kraftstoffbehälter. Die Geometrie des Meßraums und des Kraftstoffbehälters hat bei der Ermittlung des Füllstandes mit der erfindungsgemäßen Vorrichtung nahezu keinen Einfluß. Der Meßraum kann damit beispielsweise schräg angeordnet oder gebogen sein. Aus dem Füllstand kann die Meßeinrichtung anschließend das Volumen an Flüssigkeit in dem Behälter berechnen.

Der Meßraum gestaltet sich gemäß einer vorteilhaften Weiterbildung der Erfindung konstruktiv besonders einfach, wenn der Meßraum rohrförmig gestaltet ist.

Das Erreichen der Entleerung oder der maximalen Befüllung des Meßraums läßt sich beispielsweise über die Leistungsaufnahme eines die Flüssigkeitsfördermittel antreibenden Elektromotors ermitteln. Die erfindungsgemäße Vorrichtung läßt sich gemäß einer anderen vorteilhaften Weiterbildung der Erfindung mit nahezu beliebigen Flüssigkeitsfördermitteln betreiben, wenn an der oberen Begrenzung des Meßraums ein von dem Schwimmer betätigbarer Schalter angeordnet ist.

Die Ermittlung des Füllstandes an Flüssigkeit erfolgt gemäß einer anderen vorteilhaften Weiterbildung der Erfindung besonders schnell, wenn der Meßraum in seinem oberen und in seinem unteren Bereich jeweils über eine Öffnung mit dem Behälter verbunden ist und wenn die untere Öffnung bei einer Befüllung oder Entleerung des Meßraums verschließbar ist.

Der Füllstand in dem Behälter läßt sich gemäß einer anderen vorteilhaften Weiterbildung der Erfindung mit einer besonders hohen Genauigkeit ermitteln, wenn der Meßraum über mehrere in unterschiedlichen Höhen angeordnete Öffnungen mit dem Behälter verbunden ist. Hierdurch kann beispielsweise beim Befüllen des Meßraums Flüssigkeit durch die Öffnungen in den Behälter austreten. Dies führt zu einer relativ großen Zeitspanne bis zur vollständigen Befüllung des Meßraums, so daß Meßfehler bei der Erfassung des Beginns und des Endes der Messung einen geringen Einfluß auf den ermittelten Füllstand haben.

Zur weiteren Erhöhung der Genauigkeit des ermittelten Füllstandes trägt es gemäß einer anderen vorteilhaften Weiterbildung der Erfindung bei, wenn die Flüssigkeitsfördermittel einen Druckspeicher haben. Hierdurch benötigt die erfindungsgemäße Vorrichtung keine eigene Förderpumpe.

Bei der für den Kraftstoffbehälter eines Kraftfahrzeuges vorgesehenen erfindungsgemäßen Vorrichtung läßt sich eine Entleerung des Behälters durch eine Ansteuerung der Flüssigkeitsfördermittel in vorgesehenen zeitlichen Abständen einfach ermitteln.

Die Auswerteeinheit gestaltet sich gemäß einer anderen vorteilhaften Weiterbildung der Erfindung konstruktiv besonders einfach, wenn sie einen Speicher für zur Befüllung oder Entleerung ermittelte Volumen/Füllhöhe-Kennlinien und/oder für zuletzt ermittelte Werte des Füllstandes hat. Hierdurch läßt sich der Füllstand im Behälter auch dann mit einer sehr hohen Genauigkeit ermitteln, wenn der Meßraum unterschiedliche Querschnitte aufweist. Mittels eines einen großen Querschnitt aufweisenden Abschnitts des Meßraums läßt sich die Füllhöhe in diesem Bereich besonders exakt ermitteln. Bei der zur Messung des Füllstandes im Kraftstoffbehälter vorgesehenen Vorrichtung läßt sich dank der Erfindung eine geringe Restmenge besonders genau ermitteln.

Einen Einfluß der Temperaturabhängigkeit der Viskosität der Flüssigkeit in dem Behälter läßt sich gemäß einer anderen vorteilhaften Weiterbildung der Erfindung einfach beseitigen, wenn die Auswerteeinheit mit einem im Behälter angeordneten Temperatursensor verbunden ist. Dies führt insbesondere bei der zur Ermittlung des Füllstandes im Kraftstoffbehälter vorgesehenen Vorrichtung zu einer besonders genauen Ermittlung des Füllstandes, da der Kraftstoff meist starken Temperaturschwankungen unterliegt.

Durch Druckänderungen in der den Meßraum befüllenden Flüssigkeit, die betriebsbedingt durch das Flüssigkeitsfördermittel, zum Beispiel der Fördereinheit, der separaten Pumpe oder des Druckspeichers entstehen, kommt es zu einer Verfälschung der ermittelten Werte. In einer weiteren vorteilhaften Ausgestaltung wird daher dieser Verfälschung entgegengewirkt, indem ein Drucksensor am Ausgang des Flüssigkeitsfördermittels oder in der zum Meßraum führenden Leitung angeordnet und mit der Auswerteeinheit verbunden ist.

Die erfindungsgemäße Vorrichtung ist besonders kostengünstig aufgebaut, wenn eine in dem Kraftstoffbehälter des Kraftfahrzeuges eingesetzte, elektrisch betriebene Fördereinheit als Flüssigkeitsfördermittel ausgebildet ist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine schematische Darstellung einer erfindungsgemäßen Vorrichtung zur Erfassung eines Füllstandes in einem Behälter,
- Fig.2a, 2b: schematische Darstellungen zweier Schritte eines erfindungsgemäßen Verfahrens zur Erfassung eines Füllstandes in einem Behälter,
- Fig.3: eine weitere Darstellung der erfindungsgemäßen Vorrichtung.

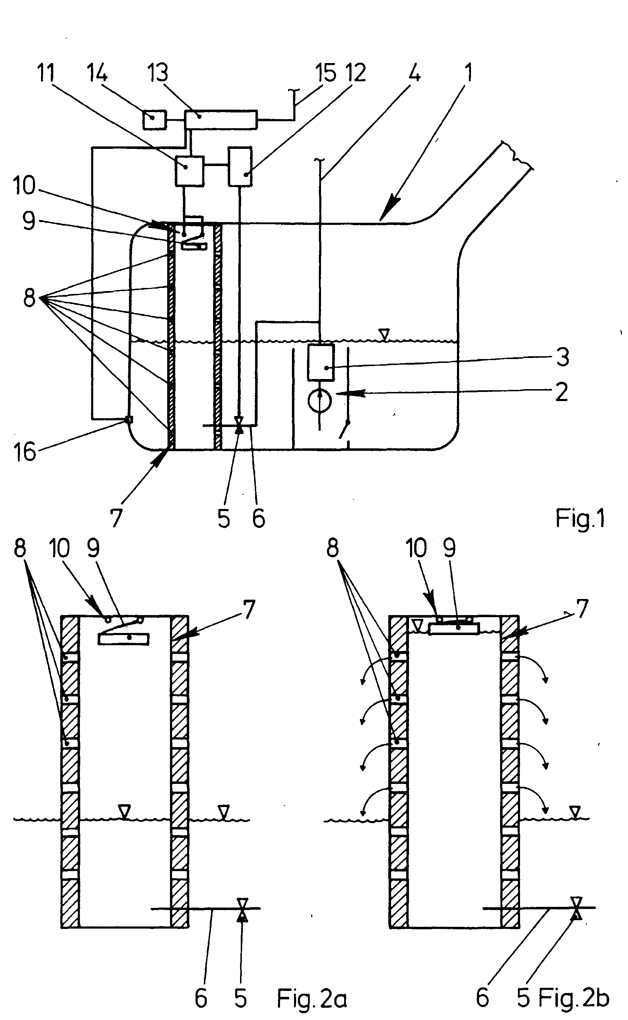

Figur 1 zeigt einen als Kraftstoffbehälter für ein Kraftfahrzeug ausgebildeten Behälter 1 mit einer Vorrichtung zur Erfassung des Füllstandes von Kraftstoff in dem Behälter 1. In dem Behälter 1 ist eine Fördereinheit 2 angeordnet, welche Kraftstoff aus dem Behälter 1 in einen Druckspeicher 3 fördert. Von dem Druckspeicher 3 gelangt der Kraftstoff über eine Vorlaufleitung 4 zu einer nicht dargestellten Brennkraftmaschine des Kraftfahrzeuges. Von der Vorlaufleitung 4 führt eine von einem Schaltventil 5 absperrbare Leitung 6 in den Bodenbereich eines rohrförmigen Meßraums 7. Der Meßraum 7 hat in seiner Wandung mehrere Öffnungen 8, durch die Kraftstoff hindurchströmen kann. In seinem oberen Bereich hat der Meßraum 7 einen von einem Schwimmer 9 betätigbaren Schalter 10. Hierbei ist der Schwimmer 9 an dem Schalter 10 befestigt. Der Schalter 10 ist mit einer Meßeinrichtung 11 verbunden. Das Schaltventil 5 in der Leitung 6 zwischen dem Meßraum 7 und der Vorlaufleitung 4 läßt sich von einer Steuereinrichtung 12 schalten. Die Steuereinrichtung 12 ist mit der Meßeinrichtung 11 und diese mit einer Auswerteeinheit 13 verbunden. Die Auswerteeinheit 13 hat einen elektronischen Speicher 14 und ist an einer zu einer nicht dargestellten Anzeigeeinheit führenden Leitung 15 angeschlossen. Weiterhin hat die Auswerteeinheit 13 eine Verbindung mit einem innerhalb des Behälters 1 angeordneten Temperatursensor 16. Zur Vereinfachung der Zeichnung ist der Meßraum 7 gerade dargestellt. Selbstverständlich kann der Meßraum 7 auch gebogen sein und unterschiedliche Querschnitte aufweisen.

Figur 2a zeigt den Meßraum 7 aus Figur 1 in einer stark vergrößerten Darstellung unmittelbar vor der Messung des Füllstandes an Kraftstoff im Behälter 1. Das Schaltventil 5 in der den Meßraum 7 mit dem Druckspeicher 3 verbindenden Leitung 6 ist geschlossen. Über die Öffnungen 8 in der Wandung des Meßraums 7 kann Kraftstoff in diesen ein- und ausströmen. Damit entspricht der Füllstand in dem Meßraum 7 dem Füllstand in dem Behälter 1. Zur Ermittlung des Füllstandes in dem Behälter 1 wird das Schaltventil 5 geöffnet. Hierdurch strömt Kraftstoff in den Meßraum 7 ein, bis dieser vollständig gefüllt ist. Dieser Zustand ist in Figur 2b dargestellt. Der Kraftstoffspiegel drückt dabei den Schwimmer 9 nach oben und schließt den Schalter 10. Die Zeitspanne zwischen dem Öffnen des Schaltventils 5 und dem Betätigen des Schalters 10 durch den Kraftstoffspiegel wird von der in Figur 1 dargestellten Meßeinrichtung 11 erfaßt und der Auswerteeinheit 13 zugeführt. Die Auswerteeinheit 13 vergleicht die Zeitspanne mit zuvor in Versuchen ermittelten und in dem Speicher 14 abgelegten Volumen/Füllhöhe-Kennlinien. Hieraus läßt sich der in dem Behälter 1 vorhandene Füllstand und damit bei bekannter Behältergeometrie das in dem Behälter 1 vorhandene Volumen an Kraftstoff berechnen. Da die Viskosität des Kraftstoffs temperaturabhängig ist, können in dem Speicher 14 mehrere Kennlinien für verschiedene Temperaturen abgelegt sein und es läßt sich entsprechend den Werten des Temperatursensors 16 die entsprechende Kennlinie auswählen. Die Öffnungen 8 in der Wandung des Meßraums 7 dienen dazu, die zur Füllung des Meßraums 7 erforderliche Zeitspanne bei feststehender Druckdifferenz zwischen dem Druckspeicher 3 und dem Innendruck im Behälter 1 auf ein vorgesehenes Maß zu vergrößern.

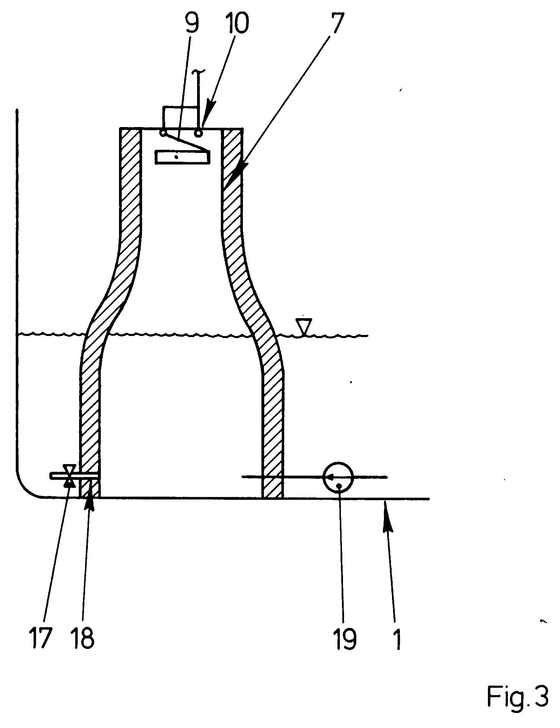

Figur 3 zeigt eine weitere Ausführungsform der erfindungsgemäßen Vorrichtung. Diese Vorrichtung unterscheidet sich von der aus Figur 1 vor allem dadurch, daß der Meßraum 7 nach oben hin offen ist und in seinem Bodenbereich eine einzige, von einem Schaltventil 17 verschließbare Öffnung 18 aufweist. Weiterhin läßt sich der Meßraum 7 mittels einer separat ansteuerbaren Pumpe 19 füllen. Vor der Messung des Füllstandes im Behälter 1 ist das Schaltventil 17 geöffnet, so daß wie in der Zeichnung dargestellt innerhalb des Behälters 1 und innerhalb des Meßraums 7 jeweils derselbe Füllstand vorhanden ist. Beim Start der Messung des Füllstandes wird zunächst das Schaltventil 17 geschlossen und daraufhin die Pumpe 19 gestartet. Der Meßraum 7 wird anschließend mit Flüssigkeit gefüllt, bis wie bei der Vorrichtung nach Figur 1 der Flüssigkeitsspiegel im Meßraum 7 den Schalter 10 betätigt. Die Auswertung der Zeitspanne zur Füllung des Meßraums erfolgt wie bei der Vorrichtung nach den Figuren 1 und 2. Der Meßraum 7 hat einen veränderlichen Querschnitt. Im Bereich des großen Querschnitts steigt der Flüssigkeitsspiegel langsamer als in dem Bereich des kleinen Querschnitts. Der im Bereich des großen Querschnitts ermittelte Füllstand ist daher genauer als der im Bereich des kleinen Querschnitts ermittelte Füllstand. Selbstverständlich könnte man die Flüssigkeit aus dem Meßraum 7 zur Messung des Füllstandes auch absaugen. Dann müßte der Schalter 10 am Boden des Meßraums 7 angeordnet sein.

## Patentansprüche

1. Verfahren zur Ermittlung eines Füllstandes einer Flüssigkeit in einem Behälter, insbesondere in einem Kraftstoffbehälter eines Kraftfahrzeuges, **dadurch gekennzeichnet,** daß ein sich über die maximal zu messende Höhe des Kraftstoffbehälters erstreckender und mit dem Kraftstoffbehälter verbundener Meßraum bei einer bekannten Druckdifferenz entleert oder vollständig befüllt wird, daß eine zur Befüllung oder Entleerung des Meßraums erforderliche Zeit ermittelt und die ermittelte Zeit auf den Füllstand in dem Behälter umgerechnet wird.

2. Verfahren nach Anspruch 1, **dadurch gekennzeichnet,** daß eine zur Befüllung oder Entleerung eines sich über die maximal zu messende Höhe des Kraftstoffbehälters erstreckenden und mit dem Kraftstoffbehälter verbundenen Meßraums erforderliche Zeit ermittelt und die ermittelte Zeit auf den Füllstand in dem Behälter umgerechnet wird.

3. Verfahren nach Anspruch 1 oder 2, **dadurch gekennzeichnet,** daß die zur Füllung des Meßraums ermittelte Zeit mit einer zuvor ermittelten Volumen/Füllhöhe-Kennlinie verglichen wird.

4. Vorrichtung zur Ermittlung eines Füllstandes einer Flüssigkeit in einem Behälter, insbesondere einem Kraftstoffbehälter eines Kraftfahrzeuges, **dadurch gekennzeichnet,** daß ein mit dem Behälter (1) verbundener und sich über die maximal zu messende Höhe erstreckender Meßraum (7) eine Verbindung mit ansteuerbaren Flüssigkeitsfördermitteln aufweist und daß eine Meßeinrichtung (11) zur Ermittlung der zur Befüllung oder Entleerung des Meßraums (7) erforderlichen Zeitspanne und eine Auswerteeinheit (13) zur Berechnung des Füllstands in dem Behälter (1) aus der ermittelten Zeitspanne ausgebildet ist.

5. Vorrichtung nach Anspruch 4, **dadurch gekennzeichnet,** daß der Meßraum (7) rohrförmig gestaltet ist.

6. Vorrichtung nach Anspruch 4 oder 5, **dadurch gekennzeichnet,** daß an der oberen Begrenzung des Meßraums (7) ein von einem Schwimmer (9) betätigbarer Schalter (10) angeordnet ist.

7. Vorrichtung nach zumindest einem der vorhergehenden Ansprüche, **dadurch gekennzeichnet,** daß der Meßraum (7) in seinem oberen und in seinem unteren Bereich jeweils über eine Öffnung (18) mit dem Behälter (1) verbunden ist und daß die untere Öffnung (18) bei einer Befüllung oder Entleerung des Meßraums (7) verschließbar ist.

8. Vorrichtung nach zumindest einem der vorhergehenden Ansprüche, **dadurch gekennzeichnet,** daß der Meßraum (7) über mehrere in unterschiedlichen Höhen angeordnete Öffnungen (8) mit dem Behälter (1) verbunden ist.

9. Vorrichtung nach zumindest einem der vorhergehenden Ansprüche, **dadurch gekennzeichnet,** daß die Flüssigkeitsfördermittel einen Druckspeicher (3) haben.

10. Vorrichtung nach zumindest einem der vorhergehenden Ansprüche, **gekennzeichnet durch** eine Ansteuerung der Flüssigkeitsfördermittel in vorgesehenen zeitlichen Abständen.

11. Vorrichtung nach zumindest einem der vorhergehenden Ansprüche, **dadurch gekennzeichnet,** daß die Auswerteeinheit (13) einen Speicher (14) für zur Befüllung oder Entleerung ermittelte Volumen/Füllhöhe-Kennlinien und/oder für zuletzt ermittelte Werte des Füllstandes hat.

12. Vorrichtung nach zumindest einem der vorhergehenden Ansprüche, **dadurch gekennzeichnet,** daß die Auswerteeinheit (13) mit einem im Behälter (1) angeordneten Temperatursensor (16) verbunden ist.

13. Vorrichtung nach zumindest einem der vorhergehenden Ansprüche, **dadurch gekennzeichnet,** daß die Auswerteeinheit (13) mit einem Drucksensor verbunden ist, der zwischen dem Meßraum (7) und dem Flüssigkeitsfördermittel angeordnet ist.

14. Vorrichtung nach zumindest einem der vorhergehenden Ansprüche, **dadurch gekennzeichnet,** daß eine in dem Kraftstoffbehälter des Kraftfahrzeuges eingesetzte, elektrisch betriebene Fördereinheit (2) als Flüssigkeitsfördermittel ausgebildet ist.
